# EUROPEAN PATENT SPECIFICATION

(11) **EP 2 558 261 B1**
(45) Date of publication and mention of the grant of the patent: **01.10.2014**
(21) Application number: 11769163.4
(22) Date of filing: 31.03.2011
(51) Int. Cl.: B28D 1/14, B23B 45/00, B23B 47/02, B23Q 1/52

(54) **A MACHINING ASSEMBLY WITH THE TRANSMISSION ADJUSTABLE INTO DIFFERENT POSITIONS**
MASCHINENANORDNUNG MIT AUF VERSCHIEDENE POSITIONEN EINSTELLBAREM GETRIEBE
ENSEMBLE D'USINAGE AVEC TRANSMISSION RÉGLABLE DANS DIFFÉRENTES POSITIONS

(30) Priority: 14.04.2010 SE 1000375
(43) Date of publication of application: 20.02.2013
(73) Proprietor: Johnsen, Anders, 781 93 Borlange (SE)
(72) Inventor: Johnsen, Anders, 781 93 Borlange (SE)
(74) Representative: Löfgren, Jonas
(86) International application number: PCT/SE2011/050375
(87) International publication number: WO 2011/129745

(56) References cited:
- EP-A1- 0 033 373
- EP-A1- 0 086 243
- EP-A1- 1 952 947
- WO-A1-82/00863
- WO-A1-87/06311
- DE-A1- 4 234 935
- US-A- 3 454 061
- US-A- 4 449 432
- US-A- 5 573 358

## Description

### FIELD OF THE INVENTION AND PRIOR ART

The present invention relates to a machining assembly according to the preamble of claim 1.

For making of holes in for instance concrete or other hard materials, it is known to use a machining assembly with a drilling tool driven by a drive motor where the drive motor is arranged in a drive unit carried by a stand. Such a machining assembly is for instance previously known from WO 82/00863 A1. In the machining assembly according to WO 82/00863 A1, the drive unit is connected to a feeding device, by means of which the drive unit is displaceable along a column included in the stand, which column in its turn is carried by a bottom plate resting against a supporting surface. The drilling tool may for instance consist of a hollow cylindrical drill bit, which at one end is attached to a spindle driven by the drive motor and which at its other end is provided with machining bodies fixed to the outer ring-shaped edge of the drill bit, diamond being the cutting material of the machining bodies. When a hole is to be made for instance in a construction member, such as joists or a wall, the drive unit is fed along the column in the direction towards the construction member together with the drill bit driven by the drive unit, the drill bit working its way into the construction member and cutting out a cylindrical body from the construction member while leaving a corresponding cylindrical hole therein.

US 3 454 061 A discloses a power hand tool where a tool spindle is rotatably mounted in a transmission unit housing, which in its turn is mounted to the housing of a drive unit. The spindle is rotatable about an axis of rotation which is off-set from the axis of rotation of a drive shaft of a drive motor included in the drive unit, a drive belt being provided in the transmission unit housing for transmitting torque from the drive shaft to the spindle.

### OBJECT OF THE INVENTION

The object of the present invention is to provide a machining assembly of the type mentioned by way of introduction with a new and favourable design.

### SUMMARY OF THE INVENTION

According to the present invention, said object is achieved by means of a machining assembly having the features defined in claim 1.

The machining assembly according to the invention comprises:
- a drive unit with a drive motor and a drive member rotatable by the drive motor, which drive member is rotatably arranged in a housing of the drive unit;
- an elongated column with a cog track extending along the column;
- a feeding device connected or connectable to the drive unit, which feeding device is provided with a rotatable feed gear wheel configured for engagement with said cog track and actuating means, by means of which the feed gear wheel is rotatable for displacement of the feeding device and the drive unit along the column;
- a transmission unit, which is attached or attachable to the drive unit and comprises:
   - a housing;
   - a first rotatable member configured for connection to said drive member of the drive unit in order to be rotated by this drive member, this first rotatable member being rotatably mounted in the housing and rotatable about a first axis of rotation;
   - a second rotatable member configured for connection to a machining tool, this second rotatable member being rotatably mounted in the housing and rotatable about a second axis of rotation extending in parallel with and at a distance from the first axis of rotation; and
   - a transmission mechanism arranged in the housing for transmitting torque from the first rotatable member to the second rotatable member, wherein the second rotatable member is rotatable under the effect of the drive motor via said drive member, the first rotatable member and the transmission mechanism; and
- one or more machining tools in the form of drilling tools, which are connectable to the second rotatable member.

The transmission unit is adjustable into different rotational positions in relation to the drive unit by pivoting the housing of the transmission unit in relation to the housing of the drive unit about a pivot axis coinciding with said first axis of rotation, and the machining assembly comprises locking means for locking the housing of the transmission unit to the housing of the drive unit in a desired rotational position in relation to this housing. Said pivot axis extends in parallel with the longitudinal axis of said column when the drive unit is connected to the column via the feeding device.

By pivoting the transmission unit in relation to the drive unit it becomes possible, in a simple and rapid manner, to adjust the lateral position of a machining tool in the form of a drilling tool in relation to the object to be drilled before the drilling is started, without having to move the drive unit or the stand which carries the drive unit. It will also become possible, when drilling by means of a drilling tool attached to the second rotatable member, to reduce the distance between the column and the centre line of the drilling tool by positioning the transmission unit in a rotational position with the drilling tool as close as possible to the column. The shorter the distance between the centre line of the drilling tool and the column, the less the tendency of the column to bend backwards away from the drilling tool when the drilling pressure is applied. A reduced deflection of the column will result in that the drilling tool will be moved straighter down into the drill hole, which will reduce the friction between the envelope surface of the drilling tool and the drill hole wall and thereby entails a more rapid and less energy-intensive drilling process.

According to an embodiment of the invention, the transmission mechanism comprises a first gear wheel which is non-rotatably connected to the first rotatable member and a second gear wheel which is non-rotatably connected to the second rotatable member, wherein the first gear wheel, directly or via one or more intermediate gear wheels, is in driving engagement with the second gear wheel so that the second rotatable member is made to rotate about the second axis of rotation via these gear wheels when the first rotatable member is rotated about the first axis of rotation. By a suitable design of the gear wheels of the transmission mechanism, the gear ratio between the first rotatable member and the second rotatable member and thereby the rotational speed of the second rotatable member can be adjusted as required.

Another embodiment of the invention is characterized in:
- that said locking means comprises a clamp ring which is rotatably arranged in the housing of the drive unit around said drive member, and two or more screw members co-operating with the clamp ring, the respective screw member being connected to the clamp ring via a respective threaded connecting member which extends through the housing of the transmission unit;
- that the clamp ring is provided with a shoulder, which bears against a corresponding shoulder in the housing of the drive unit and thereby prevents an axial displacement of the clamp ring in the direction towards the transmission unit;
- that the housing of the transmission unit is provided with a support surface, via which the housing is arranged to bear against a corresponding support surface on the housing of the drive unit; and
- that said screw members are arranged on either side of the first rotatable member and arranged, when being tightened, to press the housing of the transmission unit in the direction towards the clamp ring so that said support surfaces are pressed against each other into mutual locking engagement and thereby locks the housing of the transmission unit to the housing of the drive unit in the prevailing rotational position.

It hereby becomes possible, in a rapid and simple manner, to lock the housing of the transmission unit to the housing of the drive unit in a desired rotational position.

Another embodiment of the invention is characterized in:
- that the drive unit is provided with a fluid channel, which is connected to a fluid channel that extends through the clamp ring;
- that the transmission unit is provided with a fluid channel which extends through the transmission unit; and
- that said fluid channel in the clamp ring, when the transmission unit is attached to the drive unit, is connected to said fluid channel in the transmission unit via a connection member which extends between the claim ring and the housing of the transmission unit.

Owing to the fact that the connection member extends between the clamp ring and the housing of the transmission unit, the connection member will move together with the clamp ring when the clamp ring is pivoted together with the housing of the transmission unit about said pivot axis, whereby said fluid channels may remain connected to each other through the connection member when the housing of the transmission unit is pivoted in relation to the housing of the drive unit. Hereby, it will be possible to supply flushing liquid through these fluid channels to a machining tool attached to the transmission unit irrespective of the rotational position of the transmission unit in relation to the drive unit.

According to another embodiment of the invention, the transmission unit is detachably connectable to the drive unit. Hereby, a transmission unit connected to the drive unit may in case of need be exchanged for another transmission unit.

According to another embodiment of the invention, the machining assembly comprises two or more such transmission units, which are detachably connectable to the drive unit and which have different distances between the first axis of rotation and the second axis of rotation and/or different gear ratios of the transmission mechanism. Hereby, the machining assembly may in a simple and rapid manner be adapted in dependence on the machining tool to be used by change of transmission unit. A transmission unit with a longer distance between the axes of rotation and a lower gear ratio of the transmission mechanism may for instance be chosen when drilling is to take place with a drilling tool which has a comparatively large diameter, whereas a transmission unit with a shorter distance between the axes of rotation and a higher gear ratio of the transmission mechanism may be chosen when drilling is to take place with a drilling tool which has a comparatively small diameter.

Other favourable features of the machining assembly according to the invention will appear from the dependent claims and the description following below.

### BRIEF DESCRIPTION OF THE DRAWINGS

The invention will in the following be more closely described by means of embodiment examples, with reference to the appended drawings. It is shown in:
- Fig 1: a perspective view of a machining assembly according to an embodiment of the present invention,
- Fig 2: a perspective view of a drive unit and a transmission unit included in the machining assembly of Fig 1,
- Fig 3: a perspective view of the drive unit of Fig 1,
- Fig 4: a longitudinal section through the transmission unit and a part of the drive unit of Fig 1,
- Fig 5: a section according to the line V-V in Fig 4,
- Fig 6: a section according to the line VI-VI in Fig 4,
- Fig 7a: a perspective view of a drive unit with a lengthened transmission unit, with the transmission unit shown in a first rotational position in relation to the drive unit, and
- Fig 7b: a perspective view corresponding to Fig 7a, with the transmission unit shown in another rotational position in relation to the drive unit.

### DETAILED DESCRIPTION OF PREFERRED EMBODIMENTS

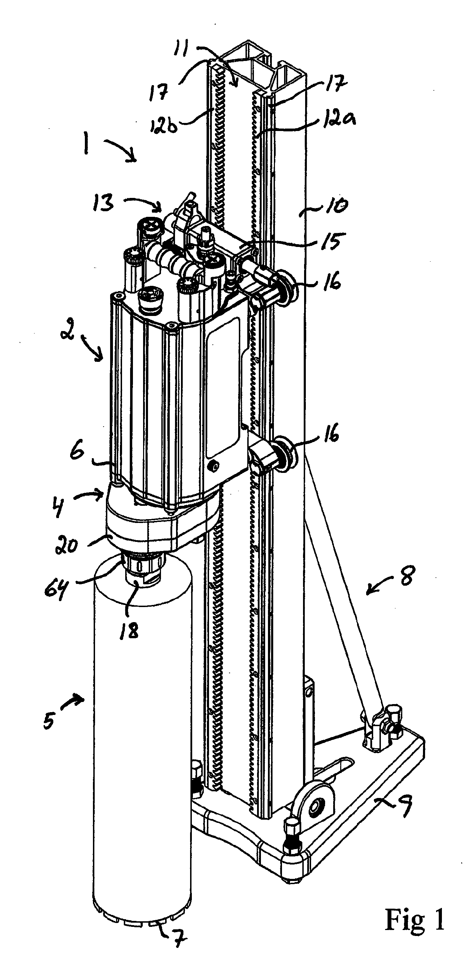

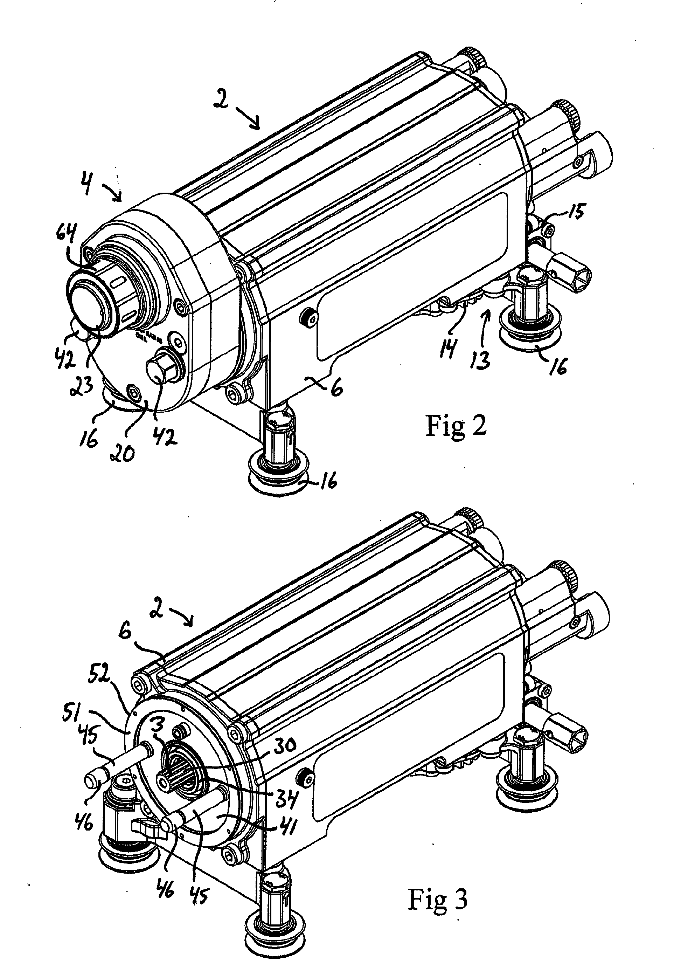

Fig 1 shows a machining assembly 1 according to an embodiment of the present invention. This machining assembly 1 comprises a drive unit 2 with a drive motor and a drive member 3 rotatable by the drive motor (see Figs 3, 4 and 6). The drive member 3 is rotatably arranged in a housing 6 of the drive unit 2. A transmission unit 4 is attached to the drive unit 2. This transmission unit 4 is arranged to transmit torque from said drive member 3 of the drive unit to a machining tool 5 attached to the transmission unit, which tool in the illustrated example consists of a drilling tool in the form of a cylindrical drill bit, which at its outer ring-shaped edge is provided with machining bodies 7 where diamonds constitute the cutting edges. This drilling tool is intended to be used for making of holes in concrete or other hard materials. The machining tool 5 is detachably attached to the transmission unit 4 and also other types of drilling tools than the one here illustrated may be attached to the transmission unit 4.

In the illustrated embodiment, the machining assembly 1 is provided with a stand 8, which comprises a base plate 9, through which the stand is intended to rest against a supporting surface, and an elongated column 10 which is attached to the base plate 9 and projects from this base plate. The column 10 is with advantage pivotally mounted to the base plate 9 in order to allow an adjustment of the inclination of the column in relation to the base plate. A cog track 11 extends along the column 10. In the illustrated example, this cog track 11 is formed by two racks 12a, 12b, which face each other and which are arranged in parallel with and at a distance from each other. The drive unit 2 is connected to a feeding device 13, which is provided with a rotatable feed gear wheel 14 (see Fig 2) configured for engagement with said cog track 11. The feeding device 13 is also provided with actuating means 15, by means of which the feed gear wheel 14 is rotatable for displacement of the feeding device 13 and the drive unit 2 along the column 10. Said actuating means 15 may comprise a feed motor for driving the feed gear wheel 14, but may also be configured for manual driving of the feed gear wheel 14. In the illustrated embodiment, the feeding device 13 is fixedly connected to the drive unit 2, but the feeding device and the drive unit could alternatively constitute separate and mutually connectable modules. Rotatably mounted guide wheels 16 are attached to the drive unit 2 and/or to the feeding device 13. These guide wheels 16 are in engagement with guide tracks 17 on the column 10 and are arranged to keep the drive unit 2 and the feeding device 13 in place on the column. In the illustrated embodiment, the machining tool 5 is attached to the transmission unit 4 via en tool holder 18, which is detachably attached to the transmission unit 4 and which is provided with a thread 19 configured for engagement with a corresponding thread on the machining tool 5.

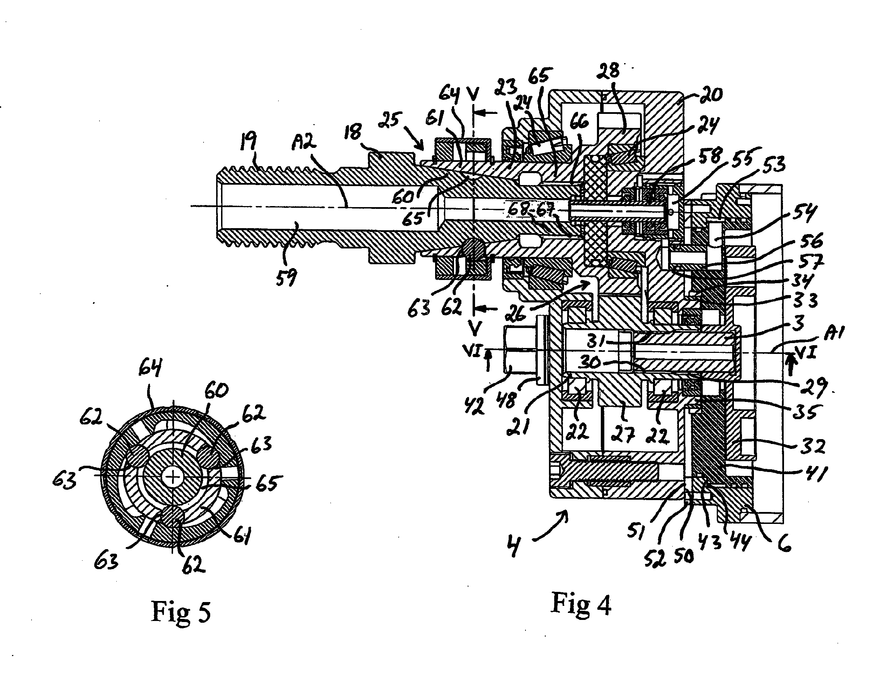

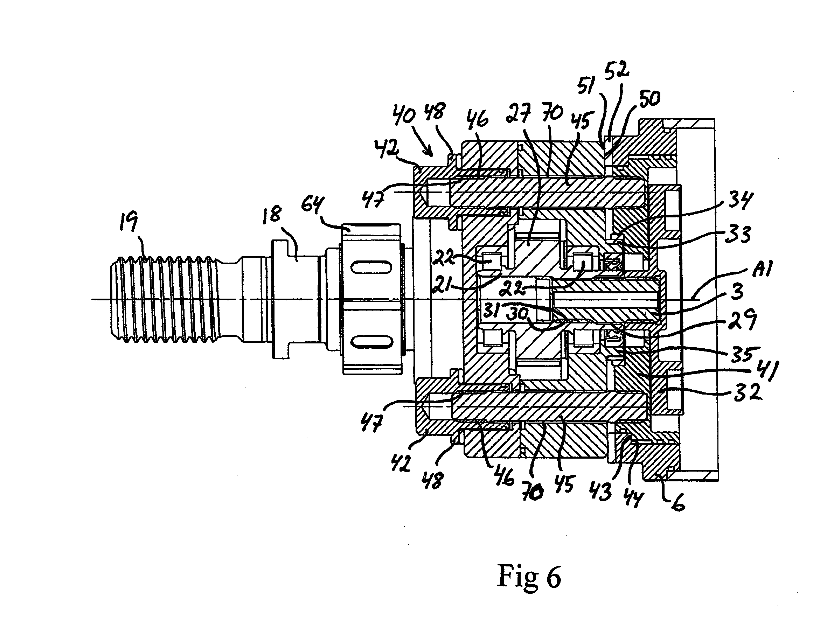

The transmission unit 4 has an external housing 20. A first rotatable member 21 (see Figs 4 and 6), which is configured for connection to said drive member 3 of the drive unit 2 in order to be rotated by this drive member, is rotatably mounted in the housing 20 by means of suitable bearing 22 and is rotatable about a first axis of rotation A1. A second rotatable member 23 (see Figs 2 and 4), which is configured for connection to a machining tool 5, is rotatably mounted in the housing 20 by means of suitable bearings 24 and is rotatable about a second axis of rotation A2, which extends in parallel with and at a distance from the first axis of rotation A1. Said axes of rotation A1, A2 are consequently parallel offset in relation to each other. The first rotatable member 21 is accessible from the side of the housing 20 that faces the transmission unit 4 and the second rotatable member 23 is accessible from the opposite side of the housing 20. The second rotatable member 23 constitutes a so-called spindle and a tool holder 18 is by means of a suitable coupling device 25 connectable to this spindle. In the following, the expression spindle is used as denomination for this rotatable member 23.

A transmission mechanism 26 (see Fig 4) is arranged in the housing 20 for transmitting torque from the first rotatable member 21 to the spindle 23. The spindle 23 is consequently rotatable under the effect of the drive motor of the drive unit via said drive member 3, the first rotatable member 21 and the transmission mechanism 26.

The transmission unit 4 is adjustable into different rotational positions in relation to the drive unit 2 by pivoting the housing 20 of the transmission unit in relation to the housing 6 of the drive unit about a pivot axis coinciding with said first axis of rotation A1. Consequently, the transmission unit 4 is pivotally attached to the drive unit 2 in such a manner that the housing 20 of the transmission unit can be pivoted in relation to the housing 6 of the drive unit about said pivot axis with the transmission unit 4 remaining connected to the drive unit 2. This pivot axis extends in parallel with the longitudinal axis of the column 10 when the drive unit 2 is connected to the column by means of the feeding device 13. The machining assembly 1 comprises locking means 40 for locking the housing 20 of the transmission unit to the housing 6 of the drive unit in a desired rotational position in relation to this housing.

In the illustrated embodiment, the transmission mechanism 26 comprises a first gear wheel 27, which is non-rotatably connected to the first rotatable member 21, and a second gear wheel 28, which is non-rotatably connected to the spindle 23. The first gear wheel 27 and the first rotatable member 21 are suitably formed in one piece, and the second gear wheel 28 and the spindle 23 are suitably formed in one piece. In the example illustrated in Fig 4, the first gear wheel 27 directly engages with the second gear wheel 28 so that the spindle 23 via these gear wheels 27, 28 is made to rotate about the second axis of rotation A2 in connection with a rotation of the first rotatable member 21 about the first axis of rotation A1. The first gear wheel 27 could alternatively be in driving engagement with the second gear wheel 28 via one or more intermediate gear wheels.

In the illustrated embodiment, the drive member 3 consists of a drive shaft, which projects from the housing 6 of the drive unit and which is configured for engagement in an axial recess 29 in the first rotatable member 21. The drive member 3 is provided with external axial splines 30 configured for engagement with corresponding internal axial splines 31 in the recess 29 of the first rotatable member 21 for transmitting torque between the drive member and the first rotatable member. As an alternative, the drive member 3 could be provided with a recess for receiving a projecting shaft of the first rotatable member 21. As an alternative to axial splines, the drive member 3 and the recess 29 could be provided with mutually complementary polygonal cross-sectional shapes, such as for instance quadrangular or hexagonal cross-sectional shapes, for transmitting torque between the drive member and the first rotatable member. In the illustrated example, the drive member 3 is non-rotatably connected to a rotatable drive disc 32, which is connected to the output shaft of the drive motor via a reduction gear (not shown).

A first cylindrical guide member 33 is fixed to the housing 20 of the transmission unit and arranged coaxially with the first rotatable member 21, whereas a second cylindrical guide member 34 is fixed to the drive unit 2 and arranged coaxially with the drive member 3. These guide members 33, 34 consequently extend around the first axis of rotation A1. The guide members 33, 34 are in engagement with each other when the transmission unit 4 is attached to the drive unit 2 so as to jointly form at radial guiding between the housing 20 of the transmission unit and the drive unit 2. These guide members 33, 34 could alternatively be conically shaped. In the illustrated embodiment, the first guide member 33 consists of a guide sleeve which is fixed on a projection 35 of the housing of the transmission unit, whereas the second guide member 34 consists of a corresponding guide sleeve which is fixed to the clamp ring 41 described below.

In the illustrated embodiment, the above-mentioned locking means 40 comprises a clamp ring 41 (see Figs 3, 4 and 6), which is pivotally arranged in the housing 6 of the drive unit around the drive member 3, and two screw members 42, which co-operate with the clamp ring and which are arranged on either side of the first rotatable member 21. The drive member 3 extends through an opening in the centre of the clamp ring 41. The clamp ring 41 is provided with a conically shaped or plane shoulder 43, which bears against a corresponding shoulder 44 on the housing 6 of the drive unit and thereby prevents an axial displacement of the clamp ring in the direction towards the transmission unit 4. The respective screw member 42 is connected to the clamp ring 41 via a respective threaded connecting member 45 (see Fig 6), which extends through the housing 20 of the transmission unit in parallel with the first axis of rotation A1. In the illustrated example, the respective connecting member 45 consists of a stud screw, which at its inner end is fixed to the clamp ring 41 and which at its outer end is provided with an external thread 46. In this case, the respective screw member 42 consists of a nut, which is provided with an internal thread 47 configured for engagement with said external thread 46 on the connecting member 45. The respective screw member 42 is provided with a radially projecting flange 48, via which the screw member presses against the housing 20 when the screw member is tightened.

As an alternative, the respective screw member could consist of a screw with a screw head, which bears against the housing 20, and a screw shaft, which extends through the housing and at one of its ends is provided with an external thread configured for engagement with a corresponding internal thread in the clamp ring 41. In this case, the screw shaft consequently forms the above-mentioned connecting member.

The housing 20 of the transmission unit is provided with a support surface 50, via which the housing 20 is arranged to bear against a corresponding support surface 51 on the housing 6 of the drive unit. These support surfaces 50, 51 may be conically shaped or plane. When the support surfaces 50, 51 are conically shaped, the above-mentioned guide members 33, 34 could be dispensed with. In the illustrated embodiment, the last-mentioned support surface 51 is formed by a slide ring 52 attached to the housing 6 of the drive unit. When the screw members 42 are tightened, the flanges 48 will press the housing 20 of the transmission unit in the direction towards the clamp ring 41 so that said support surfaces 50, 51 are pressed against each other into mutual locking frictional engagement and thereby lock the housing 20 of the transmission unit to the housing 6 of the drive unit in the prevailing rotational position. By loosening these screw members 42, the locking frictional engagement between the support surfaces 50, 51 is also loosened so that the housing 20 of the transmission unit will be free to be pivoted in relation to the housing 6 of the drive unit about the above-mentioned pivot axis. During such a pivoting, the support surface 50 of the transmission unit slides against the support surface 51 of the drive unit and the clamp ring will be rotated in relation to the housing 6 of the drive unit together with the transmission unit by means of the engagement of the connecting members 45 with the housing 20 of the transmission unit and the clamp ring 41.

In the illustrated embodiment, the drive unit 2 is provided with a fluid channel 53 (see Fig 4), which is connected to a fluid channel 54 that extends through the clamp ring 41. The first-mentioned fluid channel 53 extends in a ring around the periphery of the clamp ring 41 so that it always remains connected to the fluid channel 54 in the clamp ring when the clamp ring is rotated. The transmission unit 4 is in its turn provided with a fluid channel 55, which extends through the transmission unit and which, when the transmission unit 4 is attached to the drive unit 2, is connected to said fluid channel 54 in the clamp ring via a connection member 56 that extends between the clamp ring 41 and the housing 20 of the transmission unit. Said connection member 56 may for instance consist of a pipe, which is attached to and projects from the clamp ring 41 and which is received in a recess 57 in the housing 20 of the transmission unit, as illustrated in Fig 4. The fluid channel 55 in the transmission unit ends with a pipe 58, which extends into the spindle 23 along the second axis of rotation A2. This pipe 58 is configured for connection with a fluid channel 59 which extends axially through the tool holder 18. Via these fluid channels 53, 54, 55, 59, flushing liquid can be supplied from the drive unit 2 to a machining tool 5 attached to the tool holder 18 irrespective of the rotational position of the transmission unit in relation to the drive unit.

As an alternative to the illustrated embodiment, the housing 20 of the transmission unit could be pivotally connected to the housing 6 of the drive unit by means of a cylindrical guide member, which is rigidly connected to the housing 20 of the transmission unit and which is in rotatable engagement with a corresponding cylindrical guide member rigidly connected to the housing 6 of the drive unit, the first-mentioned guide member being lockable to the last-mentioned guide member in a desired rotational position in relation to this guide member by means of suitable locking means.

In the illustrated embodiment, the tool holder 18 is attached to the spindle 23 by means of a coupling device 25, which comprises an externally cone-shaped section 60 on the tool holder configured to engage with a corresponding internally cone-shaped section 61 in the spindle. Three locking balls 62 are received in a respective radial through hole 63 in the internally cone-shaped section 61, while being radially displaceable in this hole. A locking sleeve 64 is rotatably arranged on the outside of the spindle 23 outwardly of the locking balls 62. This locking sleeve 62 is rotatable to an fro between a locking position (see Figs 4 and 5), in which the locking sleeve forces the respective locking ball 62 to assume an advanced position with the locking ball extending down into a groove 65 on the externally cone-shaped section 60 while preventing a mutual axial displacement between the tool holder 18 and the spindle 23, and a releasing position, in which the locking sleeve 64 allows the respective locking ball 62 to be displaced radially outwards to a retracted position while allowing a mutual axial displacement between the tool holder 18 and the spindle 23. The spindle 23 is also provided with an internally cylindrical section 65 provided with internal axial splines 66, which are configured for engagement with external axial splines 67 on an externally cylindrical section 68 on the tool holder 18 for transmitting torque between the spindle and the tool holder. As an alternative to axial splines, said sections 65, 68 could have mutually complementary polygonal cross-sectional shapes, such as for instance quadrangular or hexagonal cross-sectional shapes, for transmitting torque between the spindle and the tool holder.

The transmission unit 4 is suitably detachably connectable to the drive unit 2, so that a transmission unit attached to the drive unit may be exchanged for another transmission unit in case of need. The machining assembly 1 with advantage comprises two or more transmission units 4, 4', which are connectable to the drive unit 2 and which have different distances between the first axis of rotation A1 and the second axis of rotation A2 and/or different gear ratios of the transmission mechanism 26.

In the illustrated embodiment, the transmission unit 4 can be disengaged from the drive unit 2 by unscrewing the screw members 42 from the connecting members 45, whereby the transmission unit will be free to be pulled away from the drive unit in the axial direction of the connecting members. When a transmission unit 4 is to be displaced into engagement with the drive unit 2, the connecting members 45 will function as guide pins for the transmission unit 4 when the transmission unit slides axially on the connecting members 45 via guide holes 70 (see Fig 6) extending through the transmission unit.

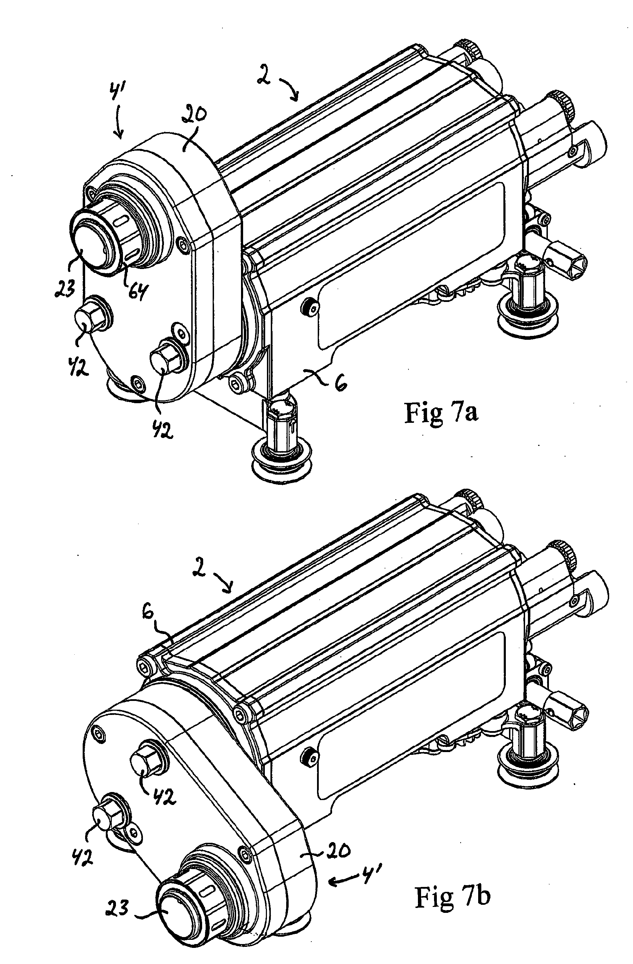

Figs 7a and 7b illustrate the drive unit 2 connected to a transmission unit 4' which has a longer distance between the first axis of rotation A1 and the second axis of rotation A2 as compared to the transmission unit 4 illustrated in Fig 1. The transmission unit 4' is shown in two different rotational positions in relation to the drive unit 2 in Figs 7a and 7b.

The invention is of course not in any way restricted to the embodiments described above. On the contrary, many possibilities to modifications thereof will be apparent to a person with ordinary skill in the art without departing from the basic idea of the invention as defined in the appended claims.

## Claims

1. A machining assembly comprising:
- a drive unit (2) with a drive motor and a drive member (3) rotatable by the drive motor, which drive member is rotatably arranged in a housing (6) of the drive unit;
- an elongated column (10) with a cog track (11) extending along the column;
- a feeding device (13) connected or connectable to the drive unit (2), which feeding device is provided with a rotatable feed gear wheel (14) configured for engagement with said cog track (11) and actuating means (15), by means of which the feed gear wheel (14) is rotatable for displacement of the feeding device (13) and the drive unit (2) along the column (10);
- a transmission unit (4, 4'), which is attached or attachable to the drive unit (2) and comprises:
• a housing (20);
• a first rotatable member (21) configured for connection to said drive member (3) of the drive unit in order to be rotated by this drive member, this first rotatable member (21) being rotatably mounted in the housing (20) and rotatable about a first axis of rotation (A1);
• a second rotatable member (23) configured for connection to a machining tool, this second rotatable member (23) being rotatably mounted in the housing (20) and rotatable about a second axis of rotation (A2), which extends in parallel with and at a distance from the first axis of rotation (A1); and
• a transmission mechanism (26) arranged in the housing (20) for transmitting torque from the first rotatable member (21) to the second rotatable member (23), wherein the second rotatable member (23) is rotatable under the effect of the drive motor via said drive member (3), the first rotatable member (21) and the transmission mechanism (26); and
- one or more machining tools (5) in the form of drilling tools, which are connectable to the second rotatable member (23), **characterized in:**
- **that** the transmission unit (4) is adjustable into different rotational positions in relation to the drive unit (2) by pivoting the housing (20) of the transmission unit in relation to the housing (6) of the drive unit about a pivot axis coinciding with said first axis of rotation (A1), and that the machining assembly (1) comprises locking means (40) for locking the housing (20) of the transmission unit to the housing (6) of the drive unit in a desired rotational position in relation to this housing; and
- **that** said pivot axis extends in parallel with the longitudinal axis of said column (10) when the drive unit (2) is connected to the column (10) via the feeding device (13).

2. A machining assembly according to claim 1, **characterized in that** the transmission mechanism (26) comprises a first gear wheel (27) which is non-rotatably connected to the first rotatable member (21) and a second gear wheel (28) which is non-rotatably connected to the second rotatable member (23), wherein the first gear wheel (27), directly or via one or more intermediate gear wheels, is in driving engagement with the second gear wheel (28) so that the second rotatable member (23) is made to rotate about the second axis of rotation (A2) via these gear wheels (27, 28) when the first rotatable member (28) is rotated about the first axis of rotation (A1).

3. A machining assembly according to claim 1 or 2, **characterized in that** the first rotatable member (21) is provided with axial splines (31), which are configured for engagement with corresponding axial splines (30) on said drive member (3).

4. A machining assembly according to any of claims 1-3, **characterized in:**
- **that** a first cylindrical or conical guide member (33) is fixed to the housing (20) of the transmission unit and arranged coaxially with the first rotatable member (21);
- **that** a second cylindrical or conical guide member (34) is fixed to the drive unit (2) and arranged coaxially with said drive member (3); and
- **that** these guide members (33, 34) are in engagement with each other when the transmission unit (4) is attached to the drive unit (2) so as to jointly form a radial guiding between the housing of the transmission unit and the drive unit.

5. A machining assembly according to any of claims 1-4, **characterized in:**
- **that** said locking means (40) comprises a clamp ring (41) which is rotatably arranged in the housing (6) of the drive unit around said drive member (3), and two or more screw members (42) co-operating with the clamp ring (41), the respective screw member being connected to the clamp ring (41) via a respective threaded connecting member (45), which extends through the housing (20) of the transmission unit;
- **that** the clamp ring (41) is provided with a shoulder (43), which bears against a corresponding shoulder (44) in the housing (6) of the drive unit and thereby prevents an axial displacement of the clamp ring in the direction towards the transmission unit (4);
- **that** the housing (20) of the transmission unit is provided with a support surface (50), via which the housing is arranged to bear against a corresponding support surface (51) on the housing (6) of the drive unit; and
- **that** said screw members (42) are arranged on either side of the first rotatable member (21) and arranged, when being tightened, to press the housing (20) of the transmission unit in the direction towards the clamp ring (41) so that said support surfaces (50, 51) are pressed against each other into mutual locking engagement and thereby locks the housing (20) of the transmission unit to the housing (6) of the drive unit in the prevailing rotational position.

6. A machining assembly according to claim 5, **characterized in that** the respective connecting member (45) is fixed to the clamp ring (41) at its inner end and is provided with an external thread (46) at its outer end, wherein the associated screw member (42) consists of a nut which is provided with an internal thread (47) configured for engagement with said external thread (46) of the connecting member.

7. A machining assembly according to claim 5 or 6, **characterized in:**
- **that** the drive unit (2) is provided with a fluid channel (53), which is connected to a fluid channel (54) that extends through the clamp ring (41);
- **that** the transmission unit (4) is provided with a fluid channel (55) which extends through the transmission unit; and
- **that** said fluid channel (54) in the clamp ring, when the transmission unit (4) is attached to the drive unit (2), is connected to said fluid channel (55) in the transmission unit via en connection member (56) which extends between the claim ring (41) and the housing (20) of the transmission unit.

8. A machining assembly according to claim 7, **characterized in that** said connection member (56) consists of a pipe which is attached to and projects from the clamp ring (41).

9. A machining assembly according to any of claims 1-8, **characterized in that** the transmission unit (4, 4') is detachably connectable to the drive unit (2).

10. A machining assembly according to claim 9, **characterized in that** the machining assembly (1) comprises two or more such transmission units (4, 4'), which are connectable to the drive unit (2) and which have different distances between the first axis of rotation (A1) and the second axis of rotation (A2) and/or different gear ratios of the transmission mechanism (26).

## Patentansprüche

1. Maschinenanordnung, die umfasst:
- eine Antriebseinheit (2) mit einem Antriebsmotor und einem Antriebselement (3), das durch den Antriebsmotor drehbar ist, wobei das Antriebselement in einem Gehäuse (6) der Antriebseinheit drehbar angeordnet ist;
- eine langgestreckte Säule (10) mit einer Zahnradbahn (11), die sich entlang der Säule erstreckt;
- eine Zuführungsvorrichtung (13), die mit der Antriebseinheit (2) verbunden ist oder mit dieser verbindbar ist, wobei die Zuführungsvorrichtung mit einem drehbaren Zuführungszahnrad (14) versehen ist, das für einen Eingriff mit der Zahnradbahn (11) konfiguriert ist, und Betätigungsmittel (15), durch die das Zuführungszahnrad (14) für eine Verschiebung der Zuführungsvorrichtung (13) und der Antriebseinheit (2) entlang der Säule (10) drehbar ist;
- eine Übertragungseinheit (4, 4'), die an der Antriebseinheit (2) befestigt ist oder daran befestigt werden kann und die umfasst:
• ein Gehäuse (20);
• ein erstes drehbares Element (21), das für eine Verbindung mit dem Antriebselement (3) der Antriebseinheit konfiguriert ist, um von diesem Antriebselement gedreht zu werden, wobei dieses erste drehbare Element (21) in dem Gehäuse (20) drehbar befestigt ist und um eine erste Umdrehungsachse (A1) drehbar ist;
• ein zweites drehbares Element (23), das für eine Verbindung mit einem Maschinenwerkzeug konfiguriert ist, wobei dieses zweite drehbare Element (23) in dem Gehäuse (20) drehbar befestigt ist und um eine zweite Umdrehungsachse (A2) drehbar ist, die sich zu der ersten Umdrehungsachse (A1) parallel und in einem Abstand von dieser erstreckt; und
• einen Übertragungsmechanismus (26), der in dem Gehäuse (20) angeordnet ist, um ein Drehmoment von dem ersten drehbaren Element (21) an das zweite drehbare Element (23) zu übertragen, wobei das zweite drehbare Element (23) unter der Wirkung des Antriebsmotors über das Antriebselement (3), das erste drehbare Element (21) und den Übertragungsmechanismus (26) drehbar ist; und
- ein oder mehrere Maschinenwerkzeuge (5) in der Form von Bohrwerkzeugen, die mit dem zweiten drehbaren Element (23) verbindbar sind;
**dadurch gekennzeichnet:**
- **dass** die Übertragungseinheit (4) auf verschiedene Drehpositionen in Bezug zu der Antriebseinheit (2) einstellbar ist, indem sich das Gehäuse (20) der Übertragungseinheit in Bezug zu dem Gehäuse (6) der Antriebseinheit um eine Drehachse, die mit der ersten Umdrehungsachse (A1) zusammenfällt, dreht, und dass die Maschinenanordnung (1) Verriegelungsmittel (40) umfasst, um das Gehäuse (20) der Übertragungseinheit mit dem Gehäuse (6) der Antriebseinheit in einer gewünschten Drehposition in Bezug auf dieses Gehäuse zu verriegeln; und
- **dass** sich die Drehachse parallel mit der Längsachse der Säule (10) erstreckt, wenn die Antriebseinheit (2) über die Zuführungsvorrichtung (13) mit der Säule (10) verbunden ist.

2. Maschinenanordnung nach Anspruch 1, **dadurch gekennzeichnet, dass** der Übertragungsmechanismus (26) ein erstes Zahnrad (27), das mit dem ersten drehbaren Element (21) nicht drehbar verbunden ist, und ein zweites Zahnrad (28), das mit dem zweiten drehbaren Element (23) nicht drehbar verbunden ist, umfasst, wobei das erste Zahnrad (27) direkt oder über ein oder mehrere Zwischenzahnräder in einem Antriebseingriff mit dem zweiten Zahnrad (28) steht, so dass das zweite drehbare Element (23) hergestellt ist, um sich über diese Zahnräder (27, 28) um die zweite Umdrehungsachse (A2) zu drehen, wenn das erste drehbare Element (28) um die erste Umdrehungsachse (A1) gedreht wird.

3. Maschinenanordnung nach Anspruch 1 oder 2, **dadurch gekennzeichnet, dass** das erste drehbare Element (21) mit Axialnuten (31) versehen ist, die für einen Eingriff mit den enstpreche3nden Axialnuten (30) auf dem Antriebselement (3) konfiguriert sind.

4. Maschinenanordnung nach einem der Ansprüche 1 bis 3, **dadurch gekennzeichnet:**
- **dass** ein erstes zylindrisches oder konisches Führungselement (33) an dem Gehäuse (20) der Übertragungseinheit befestigt und koaxial mit dem ersten drehbaren Element (21) angeordnet ist;
- **dass** ein zweites zylindrisches oder konisches Führungselement (34) an der Antriebseinheit (2) befestigt und koaxial mit dem Antriebselement (3) angeordnet ist; und
- **dass** diese Führungselemente (33, 34) gegenseitig im Eingriff miteinander sind, wenn die Übertragungseinheit (4) an der Antriebseinheit (2) befestigt ist, um gemeinsam eine radiale Führung zwischen dem Gehäuse der Übertragungseinheit und der Antriebseinheit zu bilden.

5. Maschinenanordnung nach einem der Ansprüche 1 bis 4, **dadurch gekennzeichnet:**
- **dass** die Verriegelungsmittel (40) einen Klemmring (41), der in dem Gehäuse (6) der Antriebseinheit um das Antriebselement (3) drehbar angeordnet ist, und zwei oder mehrere Schraubelemente (42), die mit dem Klemmring (41) zusammenwirken, umfassen, wobei das jeweilige Schraubelement mit dem Klemmring (41) über ein jeweiliges mit einem Gewinde versehenes Verbindungselement (45), das sich durch das Gehäuse (20) der Übertragungseinheit erstreckt, verbunden ist;
- **dass** der Klemmring (41) mit einer Schulter (43) versehen ist, die gegen eine entsprechende Schulter (44) in dem Gehäuse (6) der Antriebseinheit drückt und dadurch eine axiale Verschiebung des Klemmrings in die Richtung der Übertragungseinheit (4) verhindert;
- **dass** das Gehäuse (20) der Übertragungseinheit mit einer Trägeroberfläche (50) versehen ist, über die das Gehäuse angeordnet ist, um gegen eine entsprechende Trägeroberfläche (51) auf dem Gehäuse (6) der Antriebseinheit zu drücken; und
- **dass** die Schraubelemente (42) auf beiden Seiten des ersten drehbaren Elements (21) angeordnet sind und angeordnet sind, um dann, wenn sie ganz fest angezogen sind, das Gehäuse (20) der Übertragungseinheit in die Richtung des Klemmrings (41) zu drücken, so dass die Trägeroberflächen (50, 51) in einem gegenseitigen Verriegelungseingriff gegeneinander gedrückt werden und dadurch das Gehäuse (20) der Übertragungseinheit mit dem Gehäuse (6) der Antriebseinheit in der vorwiegenden Drehposition verriegeln.

6. Maschinenanordnung nach Anspruch 5, **dadurch gekennzeichnet, dass** das jeweilige Verbindungselement (45) an dem Klemmring (41) an seinem inneren Ende befestigt ist und an seinem äußeren Ende mit einem Außengewinde (46) versehen ist, wobei das verbundene Schraubelement (42) aus einer Mutter besteht, die mit einem Innengewinde (47) versehen ist, das für einen Eingriff mit dem Außengewinde (46) des Verbindungselements konfiguriert ist.

7. Maschinenanordnung nach Anspruch 5 oder 6, **dadurch gekennzeichnet:**
- **dass** die die Antriebseinheit (2) mit einem Fluidkanal (53) versehen ist, der mit einem Fluidkanal (54), der sich durch den Klemmring (41) erstreckt, verbunden ist;
- **dass** die Übertragungseinheit (4) mit einem Fluidkanal (55) versehen ist, der sich durch die Übertragungseinheit erstreckt; und
- **dass** der Fluidkanal (54) in dem Klemmring dann, wenn die Übertragungseinheit (4) an der Antriebseinheit (2) befestigt ist, mit dem Fluidkanal (55) in der Übertragungseinheit über ein Verbindungselement (56), das sich zwischen dem Klemmring (41) und dem Gehäuse (20) der Übertragungseinheit erstreckt, verbunden ist.

8. Maschinenanordnung nach Anspruch 7, **dadurch gekennzeichnet, dass** das Verbindungselement (56) aus einem Rohr besteht, das an dem Klemmring (41) befestigt ist und von diesem übersteht.

9. Maschinenanordnung nach einem der Ansprüche 1 bis 8, **dadurch gekennzeichnet, dass** die Übertragungseinheit (4, 4') mit der Antriebseinheit (2) lösbar verbindbar ist.

10. Maschinenanordnung nach Anspruch 9, **dadurch gekennzeichnet, dass** die Maschinenanordnung (1) zwei oder mehr solcher Übertragungseinheiten (4, 4') umfasst, die mit der Antriebseinheit (2) verbindbar sind und die unterschiedliche Abstände zwischen der ersten Umdrehungsachse (A1) und der zweiten Umdrehungsachse (A2) und/oder unterschiedliche Getriebeübersetzungen des Übertragungsmechanismus (26) aufweisen.

## Revendications

1. Ensemble d'usinage comprenant :
une unité d'entraînement (2) avec un moteur d'entraînement et un élément d'entraînement (3) pouvant tourner grâce au moteur d'entraînement, lequel élément d'entraînement est agencé en rotation dans un boîtier (6) de l'unité d'entraînement ;
une colonne allongée (10) avec une crémaillère (11) s'étendant le long de la colonne ;
un dispositif d'alimentation (13) raccordé ou pouvant être raccordé à l'unité d'entraînement (2), lequel dispositif d'alimentation est prévu avec une roue dentée d'alimentation rotative (14) configurée pour la mise en prise avec ladite crémaillère (11) et des moyens d'actionnement (15), au moyen desquels la roue dentée d'alimentation (14) peut tourner pour le déplacement du dispositif d'alimentation (13) et de l'unité d'entraînement (2) le long de la colonne (10) ;
une unité de transmission (4, 4') qui est fixée ou peut être fixée à l'unité d'entraînement (2), et comprend :
un boîtier (20) ;
un premier élément rotatif (21) configuré pour le raccordement audit élément d'entraînement (3) de l'unité d'entraînement afin d'être entraîné en rotation par cet élément d'entraînement, ce premier élément rotatif (21) étant monté de manière rotative dans le boîtier (20) et peut tourner autour d'un premier axe de rotation (A1) ;
un second élément rotatif (23) configuré pour le raccordement à une machine-outil, ce second élément rotatif (23) étant monté de manière rotative dans le boîtier (20) et peut tourner autour d'un second axe de rotation (A2), qui s'étend en parallèle à et à une distance du premier axe de rotation (A1) ; et
un mécanisme de transmission (26) agencé dans le boîtier (20) pour transmettre le couple du premier élément rotatif (21) au second élément rotatif (23), dans lequel le second élément rotatif (23) peut tourner sous l'effet du moteur d'entraînement via ledit élément d'entraînement (3), le premier élément rotatif (21) et le mécanisme de transmission (26) ; et
un ou plusieurs outils d'usinage (5) se présentant sous la forme d'outils de perçage, qui peuvent être raccordés au second élément rotatif (23),
**caractérisé :**
**en ce que** l'unité de transmission (4) est ajustable dans différentes positions de rotation par rapport à l'unité d'entraînement (2) en faisant pivoter le boîtier (20) de l'unité de transmission par rapport au boîtier (6) de l'unité d'entraînement autour d'un axe de pivot coïncidant avec ledit premier axe de rotation (A1), et en ce que l'ensemble d'usinage (1) comprend des moyens de verrouillage (40) pour verrouiller le boîtier (20) de l'unité de transmission sur le boîtier (6) de l'unité d'entraînement dans une position de rotation souhaitée par rapport à ce boîtier ; et
**en ce que** ledit axe de pivot s'étend en parallèle à l'axe longitudinal de ladite colonne (10) lorsque l'unité d'entraînement (2) est raccordée à la colonne (10) via le dispositif d'alimentation (13).

2. Ensemble d'usinage selon la revendication 1, **caractérisé en ce que** le mécanisme de transmission (26) comprend une première roue dentée (27) qui est raccordée de manière non rotative au premier élément rotatif (21) et une seconde roue dentée (28) qui est raccordée de manière non rotative au second élément rotatif (23), dans lequel la première roue dentée (27), directement ou via une ou plusieurs roues dentées intermédiaires, est en mise en prise par entraînement avec la seconde roue dentée (28), de sorte que l'on fait tourner le second élément rotatif (23) autour d'un second axe de rotation (A2) via ces roues dentées (27, 28) lorsque le premier élément rotatif (28) tourne autour d'un premier axe de rotation (A1).

3. Ensemble d'usinage selon la revendication 1 ou 2, **caractérisé en ce que** le premier élément rotatif (21) est prévu avec des cannelures axiales (31), qui sont configurées pour la mise en prise avec des cannelures axiales (30) correspondantes sur ledit élément d'entraînement (3).

4. Ensemble d'usinage selon l'une quelconque des revendications 1 à 3, **caractérisé :**
**en ce qu'**un premier élément de guidage cylindrique ou conique (33) est fixé sur le boîtier (20) de l'unité de transmission et agencé de manière coaxiale avec le premier élément rotatif (21) ;
**en ce qu'**un second élément de guidage cylindrique ou conique (34) est fixé sur l'unité d'entraînement (2) et agencé de manière coaxiale avec ledit élément d'entraînement (3) ; et
**en ce que** ces éléments de guidage (33, 34) sont en mise en prise les uns avec les autres lorsque l'unité de transmission (4) est fixée sur l'unité d'entraînement (2) afin de former conjointement un guidage radial entre le boîtier de l'unité de transmission et l'unité d'entraînement.

5. Ensemble d'usinage selon l'une quelconque des revendications 1 à 4, **caractérisé :**
**en ce que** lesdits moyens de verrouillage (40) comprennent un anneau de serrage (41) qui est agencé de manière rotative dans le boîtier (6) de l'unité d'entraînement autour dudit élément d'entraînement (3), et deux éléments de vis ou plus (42) coopérant avec l'anneau de serrage (41), l'élément de vis respectif étant raccordé à l'anneau de serrage (41) via un élément de raccordement fileté (45) respectif qui s'étend à travers le boîtier (20) de l'unité de transmission ;
**en ce que** l'anneau de serrage (41) est prévu avec un épaulement (43) qui s'appuie contre un épaulement (44) correspondant dans le boîtier (6) de l'unité d'entraînement et empêche ainsi un déplacement axial de l'anneau de serrage dans la direction allant vers l'unité de transmission (4) ;
**en ce que** le boîtier (20) de l'unité de transmission est prévu avec une surface de support (50) via laquelle le boîtier est agencé pour s'appuyer contre une surface de support (51) correspondante sur le boîtier (6) de l'unité d'entraînement ; et
**en ce que** lesdits éléments de vis (42) sont agencés de chaque côté du premier élément rotatif (21) et agencé, lorsqu'il est serré, pour comprimer le boîtier (20) de l'unité de transmission dans la direction allant vers l'anneau de serrage (41) de sorte que lesdites surfaces de support (50, 51) sont comprimées les unes contres les autres en mise en prise de verrouillage mutuelle et bloquent ainsi le boîtier (20) de l'unité de transmission sur le boîtier (6) de l'unité d'entraînement dans la position de rotation prédominante.

6. Ensemble d'usinage selon la revendication 5, **caractérisé en ce que** l'élément de raccordement (45) respectif est fixé sur l'anneau de serrage (41) au niveau de son extrémité interne et est prévu avec un filetage externe (46) au niveau de son extrémité externe, dans lequel l'élément de vis (42) associé se compose d'un écrou qui est prévu avec un filetage interne (47) configuré pour la mise en prise avec ledit filetage externe (46) de l'élément de raccordement.

7. Ensemble d'usinage selon la revendication 5 ou 6, **caractérisé :**
**en ce que** l'unité d'entraînement (2) est prévue avec un canal de fluide (53), qui est raccordé à un canal de fluide (54) qui s'étend à travers l'anneau de serrage (41) ;
**en ce que** l'unité de transmission (4) est prévue avec un canal de fluide (55) qui s'étend à travers l'unité de transmission ; et
**en ce que** ledit canal de fluide (54) dans l'anneau de serrage, lorsque l'unité de transmission (4) est fixée à l'unité d'entraînement (2), est raccordé audit canal de fluide (55) dans l'unité de transmission, via un élément de raccordement (56) qui s'étend entre l'anneau de serrage (41) et le boîtier (20) de l'unité de transmission.

8. Ensemble d'usinage selon la revendication 7, **caractérisé en ce que** ledit élément raccordement (56) se compose d'un tuyau qui est fixé à et fait saillie de l'anneau de serrage (41).

9. Ensemble d'usinage selon l'une quelconque des revendications 1 à 8, **caractérisé en ce que** l'unité de transmission (4, 4') peut être raccordée de manière détachable à l'unité d'entraînement (2).

10. Ensemble d'usinage selon la revendication 9, **caractérisé en ce que** l'ensemble d'usinage (1) comprend deux ou plusieurs de ces unités de transmission (4, 4'), qui peuvent être raccordées à l'unité d'entraînement (2) et qui ont des distances différentes entre le premier axe de rotation (A1) et le second axe de rotation (A2) et/ou différents rapports de vitesse du mécanisme transmission (26).
